Europäisches Patentamt

European Patent Office

Office européen des brevets

(11) Publication number: **0 120 423**
**B1**

(12) EUROPEAN PATENT SPECIFICATION

(45) Date of publication of patent specification: **01.03.89**

(51) Int. Cl.⁴: **G 01 N 27/56**

(21) Application number: **84102921.8**

(22) Date of filing: **16.03.84**

(54) Air/fuel ratio sensor.

(30) Priority: **18.03.83 JP 44206/83**

(43) Date of publication of application:
**03.10.84 Bulletin 84/40**

(45) Publication of the grant of the patent:
**01.03.89 Bulletin 89/09**

(84) Designated Contracting States:
**DE FR GB IT**

(56) References cited:
**EP-A-0 057 899**
**EP-A-0 066 228**
**WO-A-83/04101**
**DE-A-3 028 274**
**GB-A-1 408 377**
**US-A-4 177 770**
**US-A-4 272 331**
**US-A-4 332 225**

(73) Proprietor: **HITACHI, LTD.**
**6, Kanda Surugadai 4-chome Chiyoda-ku**
**Tokyo (JP)**

(72) Inventor: **Ueno, Sadayasu**
**847-33, Ichige**
**Katsuta-shi Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

## Description

This invention relates to an air-fuel ratio detecting device for detecting the oxygen concentration in the exhaust gas of internal combustion engines to ascertain the mixing ratio of air to fuel fed to the engine (air-fuel ratio $\lambda$).

Conventional air-fuel ratio sensors, as disclosed for example in US—A—3 851 929, comprise a solid oxygen ion conductive electrolyte and electrodes provided on opposite sides of the electrolyte, one of the electrodes being exposed to the atmosphere so that a voltage proportional to the oxygen concentration in the exhaust gas encountered is produced across the electrodes.

EP—A—103 169 (priority date: 13.08.82; publication date: 21.03.84) which represents a prior art according to article 54(3) EPC, discloses an air-fuel ratio sensor ($O_2$-sensor) having at least one solid electrolyte plate made of stabilized zirconium dioxide with first and second electrodes being provided separately on one surface of the electrolyte plate and a third electrode being provided on the opposed surface of the electrolyte plate. The third electrode is supplied with current in order to enable heating of the electrolyte plate. This device further comprises a $\lambda$-detection circuit comprising an amplifier and receiving the output signal of the $O_2$-sensor element for determining the air-fuel ratio ($\lambda$), a constant current circuit supplying a predetermined current to the $O_2$-sensor element to produce a reference $O_2$-concentration signal and a heating circuit providing a heating current for heating the $O_2$-sensor element.

US—A—4 332 225 discloses an $O_2$-sensor including a heater element which is provided with means for compensating the parasitic leakage current inherent in this sensor.

With these known $O_2$-sensors, which are designed to detect exhaust gas conditions on the basis of the atmospheric oxygen concentration as the only reference, it is not possible to alter the $O_2$-detection standard as desired.

The prior art sensors show an inherent dispersion in their characteristics that originates from fabrication. Since the dispersion cannot be compensated for, it is the current practice to use only sensors which are in conformity with specific standards. Nevertheless, it is still difficult to obtain sensors of completely uniform characteristics; some ununiformity is inevitable. The dispersion in the characteristics of $O_2$-sensors results in scattering detection results, and accordingly, the oxygen concentration cannot be detected with these $O_2$-sensors with acceptable accuracy.

It is the object of this invention to provide an air-fuel detecting device capable of detecting oxygen with high accuracy, whereby any dispersion in the sensor characteristics can be compensated.

This object is achieved according to claim 1. The dependent claims refer to preferred embodiments.

The air-fuel ratio detecting device for determining the oxygen concentration in the exhaust gas of internal combustion engines according to the invention comprises

A) an $O_2$-sensor element comprising a plate-shaped oxygen ion conductive solid electrolyte base and electrodes for measuring the oxygen ion conductivity indicative of the oxygen content of the atmosphere in contact therewith and which is provided in an $O_2$-sensor plug which can be attached to the exhaust pipe of the engine, and

B) a separate module which

is connected with a cable to the $O_2$-sensor element of the $O_2$-sensor plug,
comprises

a $\lambda$-detection circuit receiving the output signal of the $O_2$-sensor element for determining the air-fuel ratio $\lambda$ and comprising an operational amplifier and means for compensating a dispersion of the $O_2$-sensor characteristic and adjusting a predetermined output characteristic of the $\lambda$-detection circuit,

a constant current circuit supplying a predetermined current to the $O_2$-sensor element to produce a reference $O_2$-concentration signal and

a heating circuit providing a heating current for heating the $O_2$-sensor element provided on a common IC-substrate, and

comprises a first connector for mechanically and electrically connecting the module to a control unit including a microprocessor provided with a second connector.

In the following preferred embodiments of the invention will be explained with reference to the accompanying drawings.

Fig. 1 is a sectional view of an $O_2$-sensor element for use in the present invention;

Figs. 2(a) to (c) are, respectively, plan, sectional, and rear views of the $O_2$-sensor elements shown in Fig. 1:

Fig. 3 is a schematic driving circuit for the $O_2$-sensor element as used in the present invention;

Figs. 4 and 5 are schematic time charts illustrating the sequential operation of the driving circuit shown in Fig. 3;

Fig. 6 is a partly sectional perspective view, showing the general construction of the device according to the invention;

Fig. 7 is a schematic representation of the circuit of the embodiment shown in Fig. 6:

Figs. 8 and 9 are schematic circuit diagrams of $\lambda$-detection circuits which may be used according to the invention;

Fig. 10 is a schematic circuit diagram of a constant current source, and

Fig. 11 is a schematic circuit diagram of a hedating circuit.

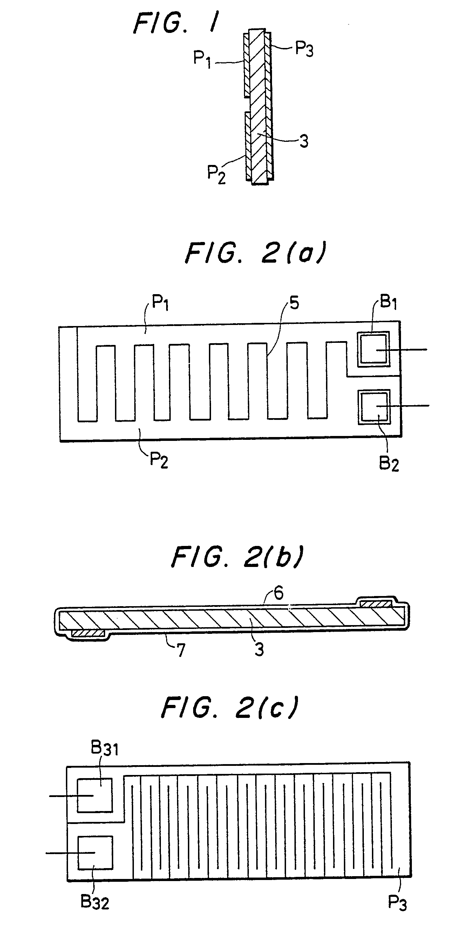

The $O_2$-sensor element shown in Fig. 1 comprises a solid electrolyte base 3, a first electrode $P_1$ and a second electrode $P_2$ both of which are formed on one side of the electrolyte base 3, but are electrically separated from each other, and a third electrode $P_3$ formed on the other side of the electrolyte base, opposite to both the first and second electrodes, in such a manner that a current flowing through the third electrode $P_3$ heats

up the electrolyte. The solid electrolyte base 3 is made, for example, of stabilized zirconia by the green sheet technique or the like. The electrolyte material is mixed with a stabilizer such as yttrium oxide or calcium oxide and a sintering aid such as alumina or silica.

A typical arrangement of an $O_2$-sensor element incorporating the structure of Fig. 1 is illustrated in Figs. 2(a), (b), and (c). Fig. 2(a) is a plan view, Fig. 2(b) a sectional view, and Fig. 2(c) a bottom view. On the main surface of the solid electrolyte base 3 is formed an electrically conductive layer, for example, a porous film of a platinum metal having a catalytic activity, by printing a thick film of a noble-metal conductive paste over the entire surface of the base and subsequent firing. A continuous groove 5 is formed in a comb-like fashion in the conductive layer thus formed to sever it into a first electrode $P_1$ and a second electrode $P_2$ electrically insulated from each other. Near one end of the solid electrolyte base 3, there are formed a bonding pad $B_1$ on the first electrode $P_1$ and another bonding pad $B_2$ on the second electrode $P_2$. These bonding pads are formed, for example, by printing and firing a platinum conductive paste. The main surface of the electrolyte base 3, including the first and second electrodes $P_1$, $P_2$, is completely covered with a porous ceramic layer 6. This layer 6, which protects the electrodes from direct exposure to exhaust gas, is formed of a material permeable to exhaust gases, catalytically active, and which has substantially the same coefficient of thermal expansion as that of the solid electrolyte base 3.

On the rear side of the solid electrolyte base 3 is formed a conductive layer, as shown in Fig. 2(c), by printing the entire surface with a thick-film of a noble-metal conductive paste of gold or the like which is slightly catalytic or non-catalytic and resistant to heat, with subsequent firing of the print. Fine-line grooves are formed across the base, from end to end, in a fine-toothed comb-like pattern. On one end portion of the conductive layer, severed by a groove, there are provided two bonding pads $B_{31}$, $B_{32}$ for the electrical connection. The rear side of the solid electrolyte base, with a third electrode $P_3$ thus formed, is completely covered with a gas tight ceramic layer 7. This layer is formed of a chemically stable, highly insulating ceramic composition based on glass into a closed-cell or non-porous structure. This layer keeps exhaust gases out of contact with the third electrode $P_3$ and prevents any change in the oxygen ion concentration at the interface between the third electrode $P_3$ and the solid electrolyte base 3 due to oxygen ion diffusion into the exhaust gas during the movement of the oxygen ions between the second and third electrodes $P_2$ and $P_3$.

The $O_2$-sensor element with the structure described above develops between the first and third electrodes $P_1$ and $P_3$ an output voltage directly proportional to the oxygen concentration at the interface between the respective electrodes and the solid electrolyte base 3. When migration of oxygen ions takes place between the second and third electrodes $P_2$, $P_3$, oxygen ions are replaced by oxygen gas at the interface of the second electrode $P_2$ with consequent diffusion of the oxygen gas through the porous ceramic layer 6 into the exhaust gas.

It is known that where the third electrode $P_3$ possesses a greater catalytic activity than the first and second electrodes $P_1$, $P_2$, the output voltage sensitivity of the $O_2$-sensor element is much enhanced. It is also known that the accuracy of the air-fuel ratio detection is improved when the third electrode $P_3$ is isolated from exhaust gas, and the partial pressure of oxygen at the interface is totally determined by the movement of oxygen ions. For these reasons the third electrode $P_3$ and the solid electrolyte base 3 are designed to provide as large surface areas as possible for the interface and are in intimate contact with each other both mechanically and electrochemically.

The $O_2$-sensor element used in this embodiment of the invention is manufactured, for example, in the following way. A single wafer of $60 \times 60$ mm is used which can be separated into 72 chips, each of $5 \times 10$ mm. The wafer is only 0,25 mm thick to economize laser cutting and also to limit the heating power required for constant-temperature control at 300°C in the exhaust gas to 4 W or less. The wafer is provided with a film of platinum for the first and second electrodes on one side and a film of gold for the third electrode on the other side, both by sputtering to a film thickness of 1,5 μm each. After a heat treatment the platinum film is coated with stabilized zirconium dioxide and the gold film with a 50:50 mixture of silica and stabilized zirconium dioxide by high-frequency sputtering. The protective films thus formed, 0,5 to 1,0 μm thick, are heat treated for reinforcement. These protective films are not formed on the bonding pad portions which are masked to evade coating. Then, the coated wafer is cut by a laser into chips. Stainless steel leads are connected to the bonding pads of each chip by wire bonding, and the chip is attached to a plug; after that, stabilized zirconium dioxide is plasma sprayed onto both sides.

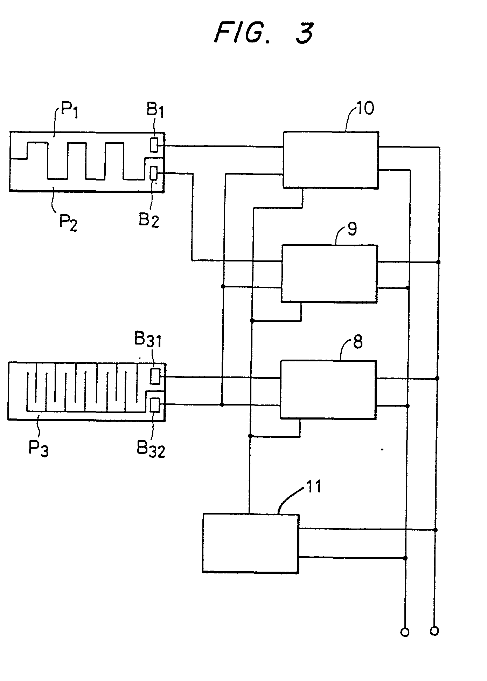

The principle of driving the $O_2$-sensor element fabricated in this way will be described below with reference to Fig. 3 which, accordingly, does not form part of the invention but serves only for explanation purposes. A heating power supply 8 for constant-temperature control is connected between the bonding pads $B_{31}$, $B_{32}$ on the rear side of the solid electrolyte base, and negative feedback control is effected with the bonding pad $B_{32}$ as the base to maintain the resistance between the two electrodes constant. A constant-current power supply 9 is connected between the bonding pads $B_2$ and $B_{32}$ so that negative feedback control can be effected with the pad $B_{32}$ as the base to permit predetermined oxygen ion flow through the solid electrolyte base 3 between the second and third electrodes $P_2$ and $P_3$. A detection amplifier 10 is connected between the bonding pad $B_1$ of the first electrode $P_1$ and the

bonding pad $B_{32}$ of the third electrode $P_3$ to amplify air-fuel ratio signals to a desired level. The heating power supply 8 for constant-temperature control, the constant-current power supply 9, and the detection amplifier 10 are operation in a predetermined sequence by a sequencer 11.

The sequencer 11 itself operates in the following manner:

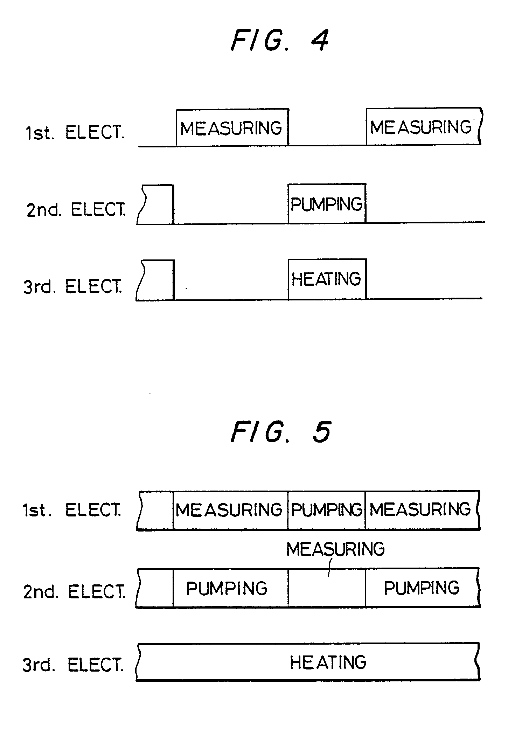

As indicated in Fig. 4, oxygen ions from the second electrode $P_2$ pass through the solid electrolyte base, and the oxygen concentration is measured by the first electrode $P_1$ for periods of time in suitable proportions on a time-sharing basis. The forced oxygen ion flow due to the application of the constant current at the bonding pads $B_2$ and $B_{32}$ is abbreviated as 'pumping'. The heating current from the third electrode $P_3$ is interrupted when necessary during measurement of the oxygen concentration.

Also, as shown in Fig. 5, oxygen ions are moved between the third electrode $P_3$ and the first and second electrodes $P_1$ and $P_2$ at alternate time intervals. Oxygen concentration measurements are alternately made by the first and second electrodes $P_1$ and $P_2$ during the periods in which oxygen ion movement does not occur.

In this way the $O_2$-sensor element can be directly heated by means of the third electrode $P_3$ which functions also as a heater, and can be activated immediately even following cold start of the engine.

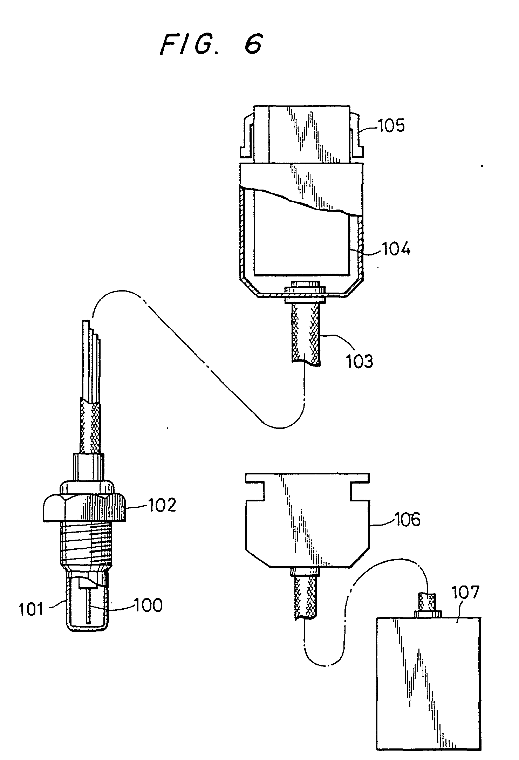

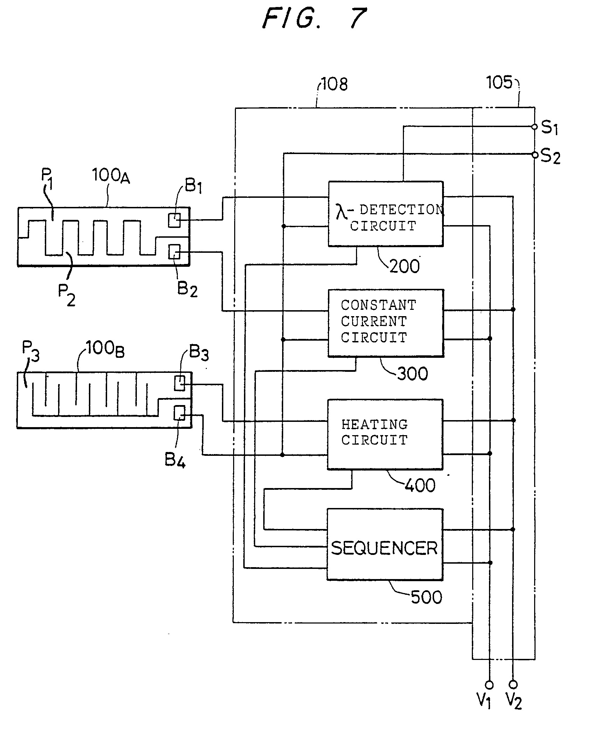

Fig. 6 illustrates an embodiment of the present invention. As shown, an $O_2$-sensor element 100 enclosed in a protective tube 101 is fitted to an $O_2$-sensor plug 102 which can be attached to the exhaust pipe of an automotive engine. This $O_2$-sensor element 100 corresponds to that as already described with reference to Fig. 1. It is connected through a cable 103 to a separate module 104 comprising an IC-substrate 108, which in turn has a first connector 105 by means of which it can be connected to a microprocessor 107 provided with a second connector 106. The interconnection of the $O_2$-sensor element 100 and the components of the module 104 is represented in the circuit diagram of Fig. 7.

The $O_2$-sensor element 100 has a first electrode $P_1$ and a second electrode $P_2$ both of which are formed on one side, or the main surface 100A, and electrically insulated from each other. The two electrodes are formed by printing a thick-film of a noble-metal conductive paste on the surface and firing and then grooving the printd surface in a comb-like fashion. Close to one end of the solid electrolyte base, there are provided a bonding pad $B_1$ on the first electrode $P_1$ and another bonding pad $B_2$ on· the second electrode $P_2$. The main surface 100A of the $O_2$-sensor element 100, including the first and second electrodes formed thereon, is entirely covered with a porous protective film.

On the rear side 100B of the $O_2$-sensor element 100 is provided a third electrode $P_3$, which is a conductive layer extending in a fine-line comb-like pattern from end to end, formed by printing a thick-film of a noble-metal conductive paste of gold or the like which is slightly catalytic or non-catalytic over the entire surface and firing and then forming a groove in a comb-like fashion. Near one end of the rear side where the conductive layer terminates, there are formed bonding pads $B_3$, $B_4$. The rear side 100B of the $O_2$-sensor element 100, including the third electrode $P_3$, is completely covered with a gas tight protective film.

To the bonding pad $B_1$ on the main surface 100A of the $O_2$-sensor element 100 is connected a λ-detection circuit 200, which determines the value of the air-fuel ratio λ.

Another input terminal of the λ-detection circuit is connected to the bonding pad $B_4$ on the rear side 100B. The λ-detection circuit 200 has a signal terminal $S_1$; the circuit is supplied with power via source terminals $V_1$, $V_2$ of the connector 105. To the bonding pad $B_2$ on the main surface 100A is connected a constant current circuit 300, another input terminal of which is connected to the bonding pad $B_4$ on the rear side 100B. The constant current circuit 300, also connected to the source terminals $V_1$, $V_2$, provides a reference oxygen concentration at the time of oxygen concentration detection. A heating circuit 400 is connected between the bonding pads $B_3$, $B_4$ on the rear side 100B of the $O_2$-sensor element 100, so that the entire rear side can serve as a heater to heat the $O_2$-sensor element. The heating circuit 400 is connected to the terminals $V_1$, $V_2$, of the connector 105 for energy supply. A sequencer 500 for controlling the λ-detection circuit 200, the constant current circuit 300, and the heating circuit 400 is connected to the individual circuits and also to the source terminals $V_1$, $V_2$. The λ-detection circuit 200, the constant current circuit 300, the heating circuit 400 and the sequencer 500 are provided on a common IC-substrate 108.

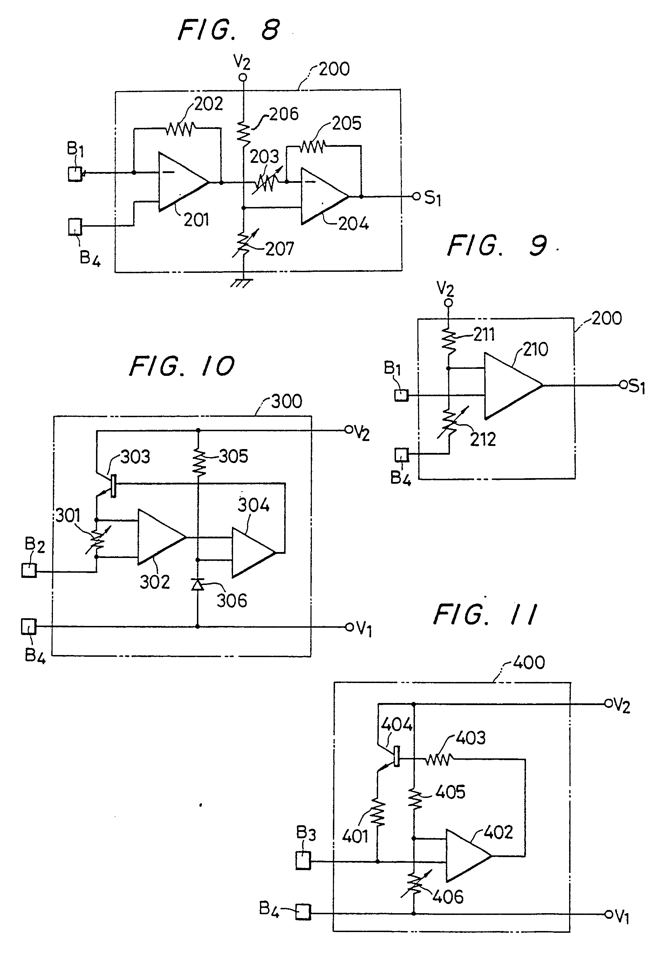

The λ-detection circuit 200 is illustrated by the circuit diagram of Fig. 8. The bonding pad $B_1$ is connected to the "−" terminal of an operational amplifier 201 to which negative feedback is applied via a resistor 202. The "+" input terminal of the amplifier 201 is connected to the bonding pad $B_4$. The output terminal of the amplifier 201 is connected through a resistor 203 to the "−" terminal of another operational amplifier 204 whose "−" input and output terminals are bridged through a resistor 205. In this arrangement a voltage as divided by the resistors 206 and 207 is applied to the "+" input terminal of the operational amplifier 204. The other ends of the resistors 206 and 207, remote from the input terminal, are connected, respectively, to the terminal $V_2$ and ground potential. The output terminal of the operational amplifier 204 is connected to a signal terminal $S_1$.

With the foregoing connections the λ-detection circuit 200 is designed to detect the air-fuel ratio. The resistor 207 is finely adjusted by laser trimming or the like to compensate for the offset voltage of the λ-detection circuit 200. Also, the resistor 203 is trimmed for gain control. The operational amplifier 204 outputs a voltage corresponding to the air-fuel ratio encountered (for example, based on a reference voltage of 0.65 V for $\lambda=1$).

When the $\lambda$-detection circuit 200 has only to perform the detection by on-off switching at every theoretical air-fuel ratio point, it may take a simpler form as in Fig. 9. Here the bonding pad $B_1$, of the $O_2$-sensor element 100 is connected to the "+" input terminal of the operational amplifier 210, the "–" input terminal of which is connected to resistors 211 and 212. The opposite ends of the resistors 211 and 212 are connected, respectively, to the source terminal $V_2$ and the bonding pad $B_4$ of the $O_2$-sensor element 100. The output terminal of the operational amplifier 210 is connected to the signal terminal $S_1$. The resistor 212 is trimmed so that it allows the operational amplifier 210 to give a low output when the air-fuel ratio of a given exhaust gas exceeds the theoretical level due to any dispersion in the characteristics of the $O_2$-sensor element 100. Thus, a dispersion in the characteristic arising from the fabrication of the $O_2$-sensor element 100 can be adequately compensated for by finely adjusting the resistor 212 by laser trimming or other similar techniques.

The constant current circuit 300 for $O_2$-pumping is designed as in Fig. 10. A resistor 301 is connected to the bonding pad $B_2$ of the $O_2$-sensor element 100 and also, at both ends, to an operational amplifier 302. The other end of the resistor 301 is connected to the emitter of a transistor 303, the collector of which is connected to the source terminal $V_2$. The base of the transistor 303 is connected to the output terminal of an operational amplifier 304, which in turn has an input terminal connected to the output terminal of the amplifier 302 and another input terminal connected to a resistor 305 and the cathode of a Zener diode 306. The other end of the resistor 305 is connected to the source terminal $V_2$. The anode of the Zener diode 306 is connected to a grounding terminal $V_1$.

In the arrangement described, a given current is supplied to produce a reference $O_2$-concentration under the control by the sequencer 500. The current is detected at both ends of the resistor 301, and the detected value is fed back to the transistor 303 so as to ensure the flow of a constant current through the $O_2$-sensor element. The current provided by this circuit determines the reference $O_2$-concentration, and the $\lambda$ value is detected by the $\lambda$-detection circuit at the next stage. This current is governed by the resistor 301. By adjusting the resistor 301 by laser trimming a desired current is obtained.

The heating circuit 300 is shown in Fig. 11. To the bonding pad $B_3$ of the sensor 100 are connected a resistor 401 and an operational amplifier 402. The output terminal of the operational amplifier 402 is connectd through a resistor 403 to the base of a transistor 404, the emitter of which is connected to the end of the resistor 401 farther from the bonding pad. The collector of the transistor 404 is connected to the terminal $V_2$ of the connector 105. The other input terminal of the operational amplifier 402 is connected between resistors 405 and 406, the other ends of the resistors 405 and 406 being connected, respectively, to the terminal $V_2$ of the connector 105 and the grounding terminal $V_1$.

The heating circuit 400 is designed to heat the rear side 100B of the $O_2$-sensor element 100. The rear side 100B is supplied with a sufficient current to attain a desired resistance (because the resistance is dependent on temperature). The current to be supplied to the rear side 100B is dictated by the current to be fed back to the transistor 404 and the amount of feedback by the resistance of the resistor 406 connected to the operational amplifier 402. Hence, trimming the resistor 406 determines the temperature of the rear side 100B. In this way a dispersion of the characteristic of the $O_2$-sensor element 100 can be corrected by adjusting the resistor 406 by laser trimming or other similar technique.

The compensation of a dispersion of the sensor element characteristic can be further improved by separating the $\lambda$-detection circuit in which a dispersion in the characteristics of the $O_2$-sensor element 100 results in a dispersion of the detection accuracy, the constant current circuit and the heating circuit from the computer, and packaging them in an IC-substrate 108 as an intelligent module as described in connection with the embodiment of Figs. 6 and 7.

In this embodiment, the $O_2$-sensor element and the IC-substrate are interconnected with a cable, and in the case of any sensor malfunction or failure, they can be replaced together as an interchangeable unit. Accordingly, there is no necessity of looking for a new $O_2$-sensor element with characteristics matching those of the processing module. All the components can be preadjusted and accordingly, maintenance is markedly simplified.

As has been described thus far, the air-fuel detecting device according to the present invention permits $O_2$-detection with good accuracy despite any dispersion the $O_2$-sensor element may have in its characteristic.

**Claims**

1. Air-fuel ratio detecting device for determining the oxygen concentration in the exhaust gas of internal combustion engines; said device comprising

A) an $O_2$-sensor element (100) comprising at least first (B1), second (B4) and third (B3) terminals, a plate-shaped oxygen ion conductive solid electrolyte base and electrodes ($P_1$, $P_2$, $P_3$) for measuring the oxygen ion conductivity indicative of the oxygen content of the atmosphere in contact therewith and which is provided in an $O_2$-sensor plug (102) which can be attached to the exhaust pipe of the engine, and

B) a separate module (104) which is connected with a cable (103) to the $O_2$-sensor element (100) of the $O_2$-sensor plug (102), comprises

a λ-detection circuit (200) receiving the output signal of the O₂-sensor element (100) for determining the air-fuel ratio λ and comprising an operational amplifier (201, 204; 210) and means (203, 207; 212) for compensating a dispersion of the O₂-sensor characteristic and adjusting a predetermined output characteristic of the λ-detection circuit (200),

a constant current circuit (300) supplying a predetermined current to the O₂-sensor element (100) to produce a reference O₂-concentration signal and

a heating circuit (400) providing a heating current for heating the O₂-sensor element (100) provided on a common IC-substrate (108), and

comprises a first connector (105) for mechanically and electrically connecting the module (104) to a control unit including a microprocessor (107) provided with a second connector (106).

2. The device according to claim 1, wherein the λ-detection circuit (200) comprises:

a first operational amplifier (210) connected with its input to the O₂-sensor element (100),

a first feedback resistor (202) connected to the output and the negative input terminal of the first operational amplifier (210) for providing a negative feedback,

a second operational amplifier (204) connected with its negative input terminal to the output of the first operational amplifier (210) via a first resistor (203), with its other input terminal to a grounded resistor (207) and via a second resistor (206) to the constant current source terminal (V₂), and with its output terminal to the signal terminal (S₁), and

a second feedback resistor (205) connected to the output and the negative input of the second operational amplifier (204) for providing a negative feedback,
and the grounded resistor (207) is trimmed so that the offset voltage of the λ-detection circuit (200) is compensated, and the first resistor (203) is trimmed for gain adjustment.

3. The device according to claim 1, wherein the λ-detection circuit (200) comprises

an operational amplifier (210) connected with its input to the first terminal of the O₂-sensor element (100) and to resistors (211, 212), the other ends thereof being connected, respectively, to the constant current source terminal (V₂) and the second terminal of the O₂-sensor element (100), the output terminal of the operational amplifier (210) being connected to the signal terminal (S₁), whereby one (212) of said resistors (211, 212) is trimmed so that a dispersion of the O₂-sensor characteristic due to fabrication is compensated and a predetermined output characteristic is achieved.

4. The device according to any one of claims 1 to 3, wherein the heating circuit (400) comprises an operational amplifier (402) connected with one of its input terminals to the third terminal of the O₂-sensor element (100) and a third resistor (401) and with the other input between a fourth resistor (405) and a fifth resistor (406), the other ends of said fourth and fifth resistors (405 and 406) being connected, respectively, to the constant current source terminal (V₂) and to the grounding terminal (V₁) also being connected to the second terminal of the O₂-sensor element (100), whereby the output terminal of the operational amplifier (402) is connected through a sixth resistor (403) to the base of a transistor (404), the emitter of which is connected to the other end of said third resistor (401), and the collector of which is connected to the terminal (V₂), the output of the operational amplifier (402) controlling the emitter-collector current of the transistor (404).

5. The device according to any one of claims 1 to 4, wherein the module (104) further comprises a sequencer (500) provided on the common IC-substrate (108) for sequentially controlling the λ-detection circuit (200), the constant current circuit (300) and the heating circuit (400).

6. The device according to any one of claims 1 to 5, further comprising a protective tube (101) enclosing the O₂-sensor element (100) and being fitted to the O₂-sensor plug (102).

**Patentansprüche**

1. Kraftstoff/Luftverhältnis-Ermittlungseinrichtung zur Ermittlung der Sauerstoffkonzentration im Auspuffgas von Verbrennungsmotoren

A) mit einem O₂-Sensorelement (100), das wenigstens erste (B1), zweite (B4) und dritte (B3) Anschlüsse, eine plattenförmige, sauerstoffionenleitende Festkörperelektrolytbasis und Elektroden (P₁, P₂, P₃) zur Messung der den Sauerstoffgehalt der mit dem Element in Berührung stehenden Atmosphäre angebenden Sauerstoffionenleitfähigkeit aufweist und das in einem am Auspuffrohr des Motors befestigbaren O₂-Sensorstopfen (102) vorgesehen ist, und

B) mit einem gesonderten Modul (104), das über ein Kabel (103) mit dem O₂-Sensorelement (100) des O₂-Sensorstopfens (102) verbunden ist,

eine λ-Ermittlungseinrichtung (200), die zur Bestimmung des Kraftstoff/Luftverhältnisses das Ausgangssignal des O₂-Sensorelementes (100) empfängt und einen Operationsverstärker (201, 204; 210) und eine Einrichtung (203, 207; 212) zur Kompensation der Streuung der O₂-Sensorcharakteristik und zur Einstellung einer vorbestimmten Ausgangscharakteristik enthält,

eine Konstantstrom-Schaltung (300), die zur Erzeugung eines O₂-Konzentrations-Bezugssignales das O₂-Sensorelement mit einem vorbestimmten Strom versorgt, und

eine Heizschaltung (400), die zum Heizen des O₂-Sensorelements (100) einen Heizstrom erzeugt, aufweist,
auf einem gemeinsamen IC-Substrat (108) ausgebildet ist, und
eine Steckverbindung (105) zur mechanischen und elektrischen Verbindung des Moduls (104) mit einer einen Mikroprozessor (107) enthaltenden und mit einer zweiten Steckverbindung (106) versehenen Steuereinheit aufweist.

2. Einrichtung gemäß Anspruch 1, in der die λ-Ermittlungseinrichtung (200)

einen ersten Operationsverstärker (110), der mit seinem Eingang mit dem $O_2$-Sensorelement (100) verbunden ist,

einen ersten Rückkopplungswiderstand (202), der zur Schaffung einer negativen Rückkopplung mit der Ausgangsklemme und der negativen Eingangsklemme des ersten Operationsverstärkers (210) verbunden ist,

einen zweiten Operationsverstärker (204), dessen negative Eingangsklemme über einen ersten Widerstand (203) mit dem Ausgang des ersten Operationsverstärkers (  ) verbunden ist, dessen andere Eingangsklemme mit einem geerdeten Widerstand (207) und über einen zweiten Widerstand (206) mit der Konstantstromquellen-Klemme ($V_2$) verbunden ist und dessen Ausgangsklemme mit der Signalklemme ($S_1$) verbunden ist, und

einen zweiten Rückkopplungswiderstand (205), der zur Schaffung einer negativen Rückkopplung mit dem Ausgang und dem negativen Eingang des zweiten Operationsverstärkers (204) verbunden ist,

aufweist und in der

der geerdete Widerstand (207) so justiert ist, daß die Offset-Spannung der λ-Ermittlungseinrichtung (200) kompensiert wird und der erste Widerstand (203) für die Verstärkungseinstellung justiert wird.

3. Einrichtung gemäß Anspruch 1, in der die λ-Ermittlungseinrichtung (200) einen Operationsverstärker (210) aufweist, dessen Eingangsklemmen mit der ersten Klemme des $O_2$-Sensorelementes (100) und mit Widerstand (211, 212) verbunden sind, deren andere Enden mit der Konstantstromquellen-Klemme ($V_2$) bzw. mit der zweiten Klemme des $O_2$-Sensorelementes (100) verbunden sind, und dessen Ausgangsklemme mit der Signalklemme ($S_1$) verbunden ist, wobei einer (212) der Widerstände (211, 212) so justiert ist, daß eine von der Montage herrührende Streuung der $O_2$-Sensorcharakteristik kompensiert und eine vorbestimmte Ausgangscharakteristik erzielt wird.

4. Einrichtung gemäß einem der Ansprüche 1 bis 3, in der die Heizschaltung (400) einen Operationsverstärker (402) aufweist, der mit einer seiner Eingangsklemmen mit der dritten Klemme des $O_2$-Sensorelementes (100) und mit einem dritten Widerstand (401) und mit der anderen Eingangsklemme mit einem vierten Widerstand (405) und mit einem fünften Widerstand (406) verbunden sind, wobei die anderen Enden dieser vierten und fünften Widerstände (405, 406) mit der Konstantstromquellen-Klemme ($V_2$) bzw. mit der Erdungsklemme ($V_1$) verbunden sind und die Erdungsklemme außerdem mit der zweiten Klemme des $O_2$-Sensorelementes (100) verbunden ist, und wobei die Ausgangsklemme des Operationsverstärkers (402) über einen sechsten Widerstand (403) mit der Basis eines Transistors (404) verbunden ist, dessen Emitter mit dem anderen Ende des dritten Widerstandes (401) verbunden ist, dessen Kollektor mit der Klemme ($V_2$) verbunden ist und dessen Emitter-Kollektor-Strom durch den Ausgang des Operationsverstärkers (402) gesteuert wird.

5. Einrichtung gemäß einem der Ansprüche 1 bis 4, in der das Modul (104) ferner eine auf dem gemeinsamen IC-Substrat (108) vorgesehene Ablaufschaltung (500) zur sequentiellen Steuerung der λ-Ermittlungseinrichtung (200), der Konstantstrom-Schaltung (300) und der Heizschaltung (400) aufweist.

6. Einrichtung gemäß einem der Ansprüche 1 bis 5, die ferner eine das $O_2$-Sensorelement (100) einschließende und am $O_2$-Sensorstopfen (102) angebrachte Schutzhaube (101) aufweist.

**Revendications**

1. Dispositif de détection du rapport air/carburant servant à déterminer la teneur en oxygène dans les gaz d'échappement de moteurs à combustion interne; ledit dispositif comprenant:

A) un élément formant capteur de $O_2$ (100) comportant au moins une première borne (B1), une seconde borne (B4) et une troisième borne (B3), une base en forme de plaque formée d'un électrolyte solide conducteur pour les ions oxygène et des électrodes ($P_1$, $P_2$, $P_3$) servant à mesurer la conductivité des ions oxygène, indicative de la teneur en oxygène de l'atmosphère en contact avec les électrodes, et prévu dans une prise (102) du capteur de $O_2$, qui peut être fixée au tuyau d'échappement du moteur, et

B) un module séparé (104) qui

est raccordé par un câble (103) à l'élément formant capteur de $O_2$ (100) de la prise (102) du capteur de $O_2$,

comprend

un circuit (200) de détection de λ qui reçoit le signal de sortie de l'élément formant capteur de $O_2$ (100) pour déterminer le rapport air carburant λ et comprend un amplificateur opérationnel (201, 204; 210) et des moyens (203, 207; 212) pour compenser une dispersion de la caractéristique du capteur de $O_2$ et régler une caractéristique de sortie prédéterminée du circuit (200) de détection de λ,

un circuit à courant constant (300) envoyant un courant prédéterminé à l'élément formant capteur de $O_2$ (100) pour produire un signal de la teneur de référence en $O_2$, et

un circuit de chauffage (40) produisant un courant de chauffage en vue de chauffer l'élément formant capteur de $O_2$ (100) prévu sur un substrat commun à circuits intégrés (108), et

comprend un premier connecteur (105) servant à raccorder mécaniquement et électriquement le module (104) à une unité de commande incluant un microprocesseur (107) pourvu d'un second connecteur (106).

2. Dispositif selon la revendication 1, dans lequel le circuit (200) de détection de λ comprend:

un premier amplificateur opérationnel (210) dont l'entrée est raccordée à l'élément formant capteur de $O_2$ (100),

une première résistance de réaction (202) raccordée à la sortie et à la borne d'entrée négative du premier amplificateur opérationnel (210) pour réaliser une contre-réaction,

un second amplificateur opérationnel (204) dont la borne d'entrée négative est raccordée à la sortie du premier amplificateur opérationnel (210) par l'intermédiaire d'une première résistance (203), et dont l'autre borne d'entrée est raccordée à une résistance (207), raccordée à la masse, et, par l'intermédiaire d'une seconde résistance (206), à la borne ($V_2$) de la source de courant constant, tandis que sa borne de sortie est raccordée à la borne ($S_1$) de transmission du signal, et

une seconde résistance de réaction (205) raccordée à la sortie et à l'entrée négative du second amplificateur opérationnel (204) de manière à produire une contre-réaction, et la résistance (207) raccordée à la masse est ajustée de telle sorte que la tension d'offset du circuit (200) de détection de λ est compensée et la première résistance (203) est ajustée de manière à fournir un ajustement du gain.

3. Dispositif selon la revendication 1, dans lequel le circuit (200) de détection de λ comprend

un amplificateur opérationnel (210), dont l'entrée est raccordée à la première borne de l'élément formant capteur de $O_2$ (100) et à des résistances (211, 212), dont les autres extrémités sont raccordées respectivement à la borne ($V_2$) de la source de courant constant et à la seconde borne de l'élément formant capteur de $O_2$ (100), la borne de sortie de l'amplificateur opérationnel (210) étant raccordée à la borne ($S_1$) de transmission du signal, ce qui a pour effet que l'une (212) desdites résistances (211, 212) est ajustée de sorte qu'une dispersion de la caractéristique du capteur de $O_2$,

due à la fabrication, est compensée et que l'on obtient une caractéristique de sortie prédéterminée.

4. Dispositif selon l'une quelconque des revendications 1 à 3, dans lequel le circuit de chauffage (400) comprend un amplificateur opérationnel (402), dont l'une des bornes d'entrée est raccordée à la troisième borne de l'élément formant capteur de $O_2$ (100) et à une troisième résistance (401) et dont l'autre entrée est raccordée entre une quatrième résistance (405) et une cinquième résistance (406), les autres extrémités desdites troisème et cinquième résistances (405 et 406) étant raccordées respectivement à la borne ($V_2$) de la source de courant constant et à la borne ($V_1$) de raccordement à la masse, également raccordée à la seconde borne de l'élément formant capteur de $O_2$ (100), la borne de sortie de l'amplificateur opérationnel (402) étant raccordée par l'intermédiaire d'une sixième résistance (403) à la base d'un transistor (404), dont l'emetteur est raccordé à l'autre extrémité de ladite troisième résistance (401), et dont le collecteur est raccordé à la borne ($V_2$), la sortie de l'amplificateur opérationnel (402) commandant le courant émetteur-collecteur du transistor (404).

5. Dispositif selon l'une quelconque des revendications 1 à 4, dans lequel le module (104) comporte en outre un séquenseur (500) prévu sur le substrat commun à circuits intégrés (108) et servant à commander de façon séquentielle le circuit (200) de détection de λ, le circuit à courant constant (300) et le circuit de chauffage (400).

6. Dispositif selon l'une quelconque des revendications 1 à 5, comportant en outre un tube protecteur (101) entourant l'élément formant capteur de $O_2$ (100) et monté sur la prise (102) du capteur de $O_2$.

*FIG. 1*

*FIG. 2(a)*

*FIG. 2(b)*

*FIG. 2(c)*

*FIG. 3*

# FIG. 4

| 1st. ELECT. | | MEASURING | | MEASURING |
| 2nd. ELECT. | | | PUMPING | |
| 3rd. ELECT. | | | HEATING | |

# FIG. 5

| 1st. ELECT. | MEASURING | PUMPING | MEASURING |
| | | MEASURING | |
| 2nd. ELECT. | PUMPING | | PUMPING |
| 3rd. ELECT. | | HEATING | |

## FIG. 6

# FIG. 7

FIG. 8

FIG. 9

FIG. 10

FIG. 11